# EUROPEAN PATENT SPECIFICATION

(11) **EP 0 527 105 B1**
(45) Date of publication and mention of the grant of the patent: **17.04.1996**
(21) Application number: 92630071.6
(22) Date of filing: 30.07.1992
(51) Int. Cl.: F04D 25/02, F04D 29/06, F16H 57/04

(54) **Transmission oil containment system**
Öleinschlussvorrichtung für ein Getriebe
Système de confinement d'huile de transmission

(30) Priority: 05.08.1991 US 740222
(43) Date of publication of application: 10.02.1993
(73) Proprietor: CARRIER CORPORATION, Syracuse New York 13221 (US)
(72) Inventor: Zinsmeyer, Thomas M., Pennellville, New York 13132 (US); Sishtla, Vishnu M., Cicero, New York 13039 (US)
(74) Representative: Waxweiler, Jean

(56) References cited:
- GB-A- 292 540
- US-A- 1 871 662
- US-A- 2 984 122
- US-A- 4 032 312
- US-A- 4 213 307

## Description

This invention relates generally to centrifugal compressors and, more particularly, to an improved lubrication method and apparatus therefor.

Hermetic centrifugal refrigeration compressors generally use an electric motor to drive the impeller through a geared up transmission. In such a compressor, the transmission is typically vented to a source of low pressure within the chiller to minimize the outward migration of oil through the shaft seals. It has been recognized that during this venting process, in addition to the refrigerant gas passing out of the transmission, some of the oil in the form of droplets or mist tends to become entrained within the refrigerant gas so as to also pass out of the transmission. This has not been a particular problem with conventional refrigerants of moderate pressure and densities.

With the more recent use of higher pressure and higher density refrigerants, such as R-22, the above described problem of oil carry-over has become more significant. That is, because of the higher pressure refrigerant, it is necessary to operate the gears at higher speeds. This, in turn, increases the turbulence and the oil mist generation within the transmission. Further, the larger pressure differentials tend to promote higher vent gas flow rates and therefore increased carry-over.

In addition to the refrigerant higher pressures, the higher densities also tend to exasperate the problem. That is, the increased densities tend to keep the oil droplets in suspension longer and makes separation more difficult. In addition, the higher densities also increase mechanical losses from centrifugal type oil separation mechanisms.

Considering now the result of oil carry-over, when the oil entrained refrigerant from the transmission is vented to the compressor inlet, it passes through the compressor and is discharged into the condenser, where it tends to coat the heat exchanger surface to thereby decrease the efficiency thereof. Some of the oil is then passed on to the cooler where the same phenomenon occurs. Thus, it will be recognized that high oil carry-over rates tend to result in reduced heat exchanger performance. Moreover, as the oil supply in the sump is diminished because of this phenomenon, there may no longer be a sufficient amount of oil to ensure that all of the moving parts that require lubrication are in fact receiving adequate supplies of oil.

GB-A-292 540 discloses the shrouding of a lubricated gear by a partition close to the periphery of the gear.

In US-A-1 871 662 there is described a centrifugal compressor according to the preamble of claim 1. More specifically, US-A-1 871 662 discloses a centrifugal compressor of the type having a motor for driving an impeller through a low speed shaft, a lubricated gear and a high speed shaft. The gear is located in a transmission housing having an oil sump and a vent fluidly communicating with an area of lower pressure. A barrier means is provided between the gear and the space surrounding the transmission, the barrier means acting to direct the flow of oil from the gear into the sump.

A method for reducing oil loss in a transmission housing of a centrifugal compressor according to the preamble of claim 6 is also known from US-A-1 871662.

The oil carryover problem has been addressed in two different ways. First, the most common approach as disclosed in the abovementioned US-A-1 871 662 is to use a mesh type oil separator in the vent line to cause oil droplets to coalesce and drain back into the transmission. A second method uses a series of hollow rotating spokes to centrifuge out the unwanted oil mist component of the vent flow. Neither of these methods, by themselves or in combination, are found to be sufficient for containing oil in a centrifugal compressor using high pressure, high density refrigerant such as R-22.

It is therefore an object of the present invention to provide an improved oil containment system for limiting oil carry-over in a centrifugal compressor.

To achieve this, the centrifugal compressor of the invention is characterized by the features claimed in the characterizing portion of claim 1 and the invention provides a method according to the characterizing portion of claim 6.

Basically, according to the invention, a shroud is disposed in close surrounding relationship to the gear to protect the gear from slinging oil radially outwardly and thereby prevent the oil from being entrained within the low pressure refrigerant in the transmission space between the shroud and the transmission housing. The shroud is placed around the drive gear in the transmission to thereby prevent the oil from being thrown radially outwardly to mix with the refrigerant in the transmission space. Instead, the shroud acts to direct the oil downwardly where it is made to flow into the sump.

In a preferred embodiment of the invention, a baffle is placed within the sump, in the vicinity of the location where the gear shroud discharge occurs. The baffle functions to divert the oil and refrigerant gas discharging from the shroud and prevent it from causing cavitation of the oil pump in the sump, which cavitation would otherwise tend to deprive the oil pump from a sufficient supply of oil.

In the drawings as hereinafter described, a preferred embodiment is depicted; however, various modifications and alternate constructions can be made thereto.

Figure 1 is a longitudinal sectional view of a centrifugal compressor having the present invention embodied therein.

Figure 2 is an axial sectional view thereof as seen along lines 2-2 of Figure 1.

Figure 3 is a partial longitudinal sectional view of the centrifugal compressor as seen from the rear.

Figure 4 is a side view of the gear shroud portion of the invention.

Figure 5 is a front view thereof.

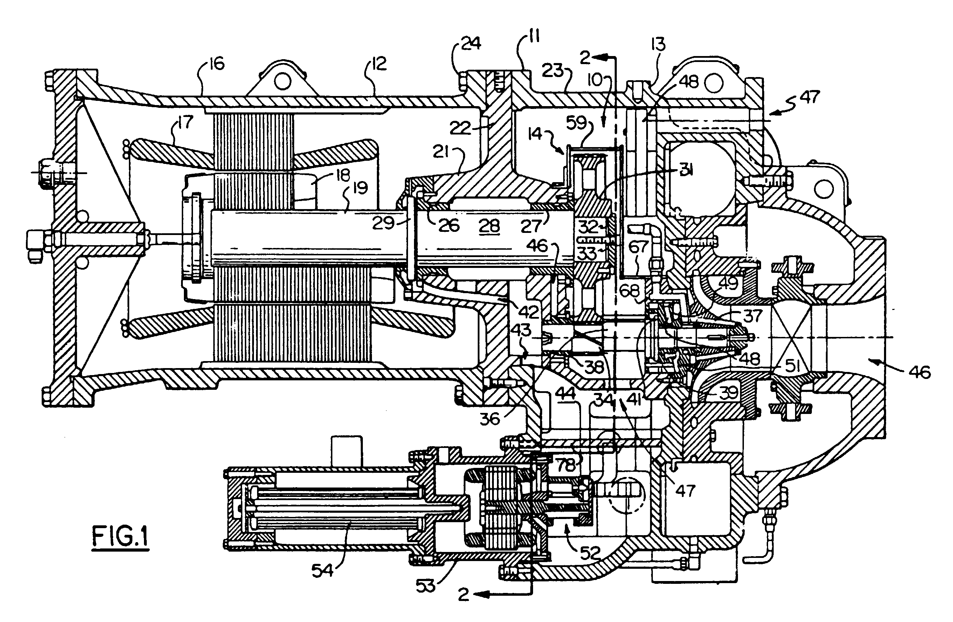

Referring now to Figure 1, the invention is shown generally at 10 as embodied in a centrifugal compressor system 11 having an electric motor 12 at its one end and a centrifugal compressor 13 at its other end, with the two being interconnected by a transmission 14. The motor 12 includes an outer casing 16 with a stator coil 17 disposed around its inner circumference. The rotor 18 is then rotatably disposed within the stator winding 17 by way of a rotor shaft 19 which is overhung from, and supported by, the transmission 14.

The transmission 14 includes a transmission assembly 21 having a radially extending annular flange 22 which is secured between the motor casing 16 and the compressor casing 23 by plurality of bolts 24. Rotatable mounted within the transmission assembly 21, by way of a pair of axially spaced bearings 26 and 27 is a transmission shaft 28 which is preferably integrally formed as an extension of the motor shaft 19. The collar 29, which is attached or installed by shrink fit, is provided to transmit the thrust forces from the shaft 28 to the thrust bearing portion of the bearing 26. The end of shaft 28 extends beyond the transmission assembly 21 where a drive gear 31 is attached by way of a retaining plate 32 and a bolt 33.

The drive gear 31 engages a driven gear 34 which in turn drives a high speed shaft 36 for directly driving the compressor impeller 37. Typical speeds for the respective shafts are 3550 rpm for the transmission shaft 28 and 16,000 rpm for the high speed driven shaft 36. The high speed shaft 36 is supported by bearings, one of which is shown at 38 and the other at 39. A thrust bearing 41 is provided to counteract the axial thrust that is developed by the impeller 37.

Lubrication of the bearings occurs as follows. Oil is provided to the bearing 26 and 27 by way of the transmission assembly 21. Oil from the bearing 26 flows through the passage 42 and then through the opening 43 to the sump 44. From the oil supply annulus surrounding bearing 27 the oil flows into passage 46 to lubricate the bearing 38. The oil then runs from the left side of the bearing 38 through the opening 43 to enter the sump 44. Similarly, it flows from the right side of the bearing 38 through the opening 47 into the sump 44.

Referring now to the bearing 39 at the other end of the high speed shaft 36, an oil feed passage 48 is provided as a conduit for oil flowing radially inwardly to the bearing surfaces, and an oil slinger 49 is provided to sling the oil radially outwardly from the shaft 36. Annular cavity 51 functions to receive the oil which is slung off from the bearing 39 and to facilitate the drainage of oil through a passage (not shown) to the sump 44. As the oil accumulates in the sump 44, it is drawn into the inlet 52 of the oil pump 53, which functions to pump it through a filter 54 and then to the system components for lubrication thereof.

In order to limit the migration of oil from the transmission 14 by way of the shaft seals, the transmission 14 is vented to a source of low pressure refrigerant (i.e. to the compressor inlet 46) by way of a transmission vent opening 47. An oil separator or demister 48 is provided to recover a certain amount of entrained oil before the refrigerant passes into the opening 47. Such an oil separator, however, will not, by itself, suffice if the amount of oil that is so entrained is excessive, such as tends to be the case with high speed, high pressure machines such as those used with R-22 refrigerant. It is the purpose of the present invention to limit this oil entrainment, and thus the oil carry-over that would result, by the use of structural features in the system.

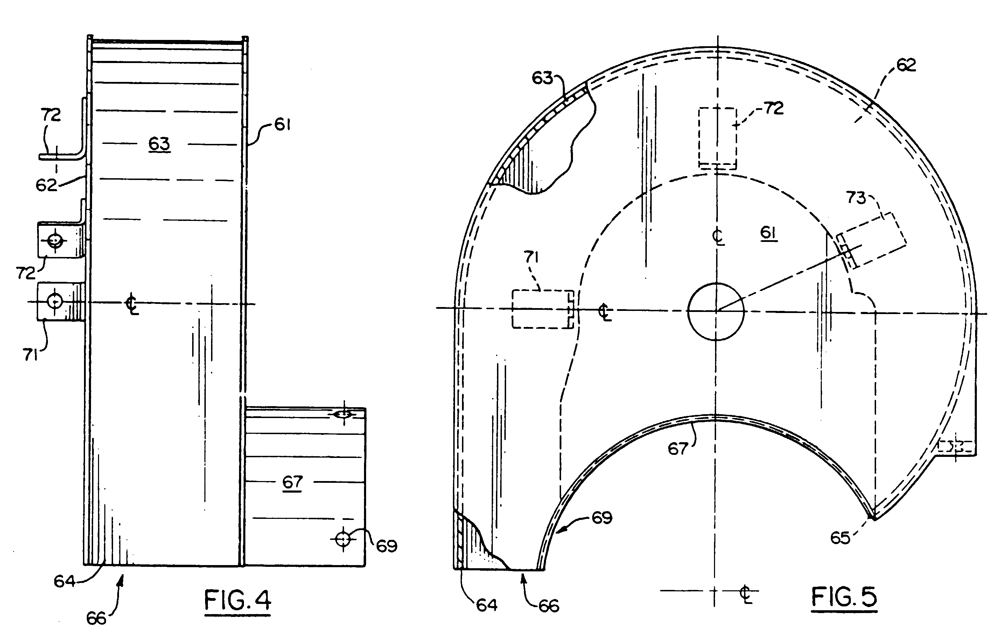

It is recognized that a certain amount of oil is going to be thrown radially outwardly by the drive gear 31. In order to prevent that oil from creating a mist and being entrained within the refrigerant surrounding the transmission 14, a gear shroud 59 is provided in close surrounding relationship to the gear 31. The gear shroud 59 is shown in Figures 1-5. As will be seen, the gear shroud 59 includes a front wall 61 and a rear wall 62, with the two being interconnected by way of a semi-cylindrical portion 63. The semi-cylindrical portion 63 circumscribes an angle of about 270° as it extends from its one end 64 to the other 65. Near the end 64, the semi-cylindrical portion becomes planar in form to provide, in combination with portions of the front 61 and rear 62 walls, a discharge chute 66 that functions to direct the oil that is collected by the gear shroud 59 in a downward direction toward the oil pump 53.

Integrally connected to and extending substantially normally from the shroud front wall 61 is a semi-cylindrical extension portion 67 which is fastened to the casing 68 by a plurality of fasteners passing through hole 69. This member functions to isolate the area surrounding the high speed shaft 36 from the area surrounding the transmission 14 such that oil will not tend to be centrifuged out in to that area.

On the rear wall 62 of the gear shroud 59 there are provided a plurality of fastening brackets 71, 72 and 73, which allow for a fastening of the gear shroud 59 to the transmission assembly 21 by appropriate fasteners. In this way, the gear shroud 59 is rigidly supported between the transmission assembly 21 and the casing 68 so as to form a barrier between the drive gear 31 and the area surrounding the transmission 14 such that oil that may be flung radially outwardly by the drive gear 31 is diverted and prevented from misting and thereby being entrained within the refrigerant in that area. All of the oil that is so restricted tends to flow downwardly to be discharged from the discharge chute 66 where it enters the sump 44.

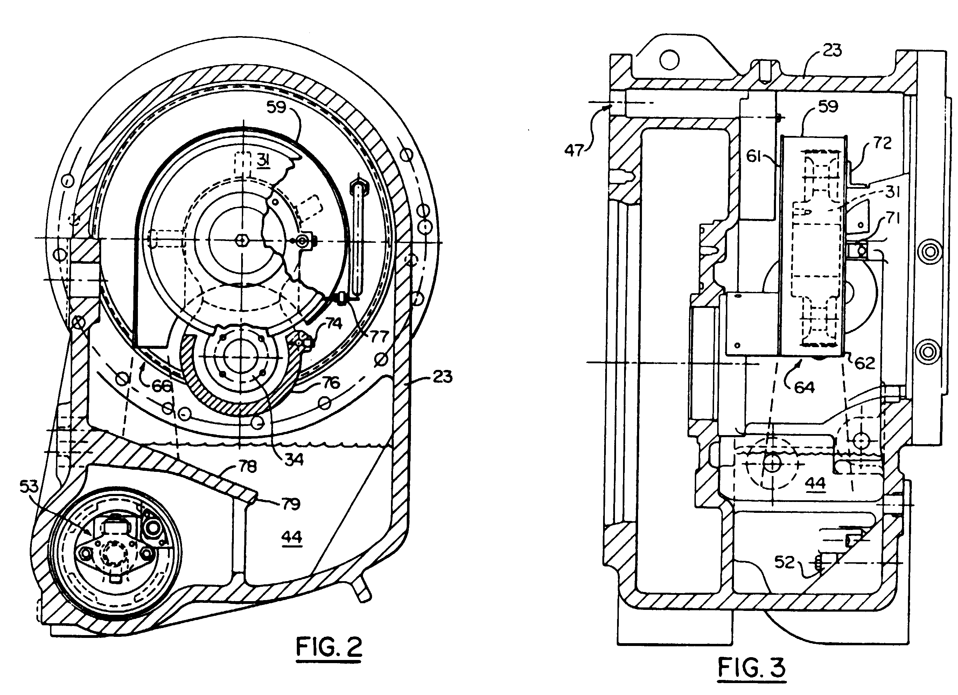

It should be mentioned that the oil that is on the drive gear 31 originates from both the bearing 27 and from a supply of oil that is directed specifically to the drive gear 31 and the high speed driven gear 34. This oil enters by way of a spray device 74 which is mounted on a casing 76 (see Figure 2), to cause oil to flow directly onto the gears. A stripper 77 is provided to strip the excess oil from the drive gear 31 and allow it to fall down into the sump.

Considering now the affect of the gear shroud 59 as it contains the transmission oil and directs it into the sump 44, it will be seen in Figure 2 that the discharge chute 66 is directly over the oil pump 53 in the sump. Because of the high speed at which the drive gear 31 rotates, the oil is discharged with such a force that it tends to create turbulence and cause cavitation in the oil pump 53 by evacuating the oil from the sump in that locality. Further, the gear teeth act as a fan or blower and propel a large volume of refrigerant gas plus entrained oil. The oil and gas mixture produces a frothy solution in the sump which, when injected by the pump, causes cavitation. To prevent this from occurring, a baffle 78 (see Figures 1 and 2) is provided as an integral part of the compressor casing 23 that extends outwardly and downwardly into the sump 44 to protect the oil pump from this phenomenon. That is, the submerged baffle 78 functions to protect the inlet 52 of the oil pump 53 from the localized churning and detrimental effects of refrigerant gas entrainment brought on by the close proximity of the gear shroud discharge chute 66 to the oil sump 44. The extended end 79 of the baffle 78 is secured to the compressor casing where it meets the side walls and is open under end 79 to allow for the free flow of oil from the sump to the oil pump 53.

## Claims

1. A centrifugal compressor (11) of the type having a motor (12) for driving an impeller (37) through a low speed shaft (28), a lubricated gear (31) and a high speed shaft (36),
wherein the gear (31) is located in a transmission housing (23) having an oil sump (44), a vent (47) fluidly communicating with an area of lower pressure, and a barrier means (59) between the gear (31) and the space surrounding the transmission (14), the barrier means (59) acting to direct the flow of oil from the gear (31) into the sump (44),
characterized in that the barrier means is a shroud (59) disposed in close surrounding relationship to the gear (31) to protect the gear (31) from slinging oil radially outwardly and thereby prevent the oil from being entrained within the low pressure refrigerant in the transmission space between the shroud (59) and the transmission housing (23).

2. A centrifugal compressor as set forth in claim 1, characterized in further including an oil pump (53) in the sup (44) and a baffle (78) disposed between the pump (53) and the shroud (59) to deflect the oil being directed from the shroud (59) so as to prevent cavitation at the oil pump (53).

3. A centrifugal compressor as set forth in claim 1, characterized in including an oil separator (48) in the vent (47).

4. A centrifugal compressor as set forth in claim 1, characterized in that the centrifugal compressor (11) is designed for compression of a relatively high pressure, high density refrigerant.

5. A centrifugal compressor as set forth in claim 4, characterized in that the refrigerant is R-22.

6. A method of reducing oil loss for a transmission housing (23) of a centrifugal compressor (11) having an oil sump (44) and a lubricated high speed gear (31) which tends to sling oil outwardly to generate mist in the transmission (14), the method comprising the steps of:
venting (47) the transmission (14) to an area of lower pressure,
directing the flow of oil from the gear (31) into the sump (44) by providing a barrier (59) between the gear (31) and the space surrounding the transmission (14),
characterized in that the barrier is formed by a shroud (59), and
in comprising the step of placing the shroud (59) in close surrounding relationship to the gear (31) to impede the radially outward flow of oil from the gear (31) and thereby substantially reduce the generation of oil mist in the space surrounding the transmission (14).

7. A method as set forth in claim 6, characterized in including the step of providing a discharge section (66) on the shroud (59) to direct the flow of oil from the shroud (59) to the adjacent oil sump (44).

8. A method as set forth in claim 7, characterized in including the step of providing a baffle (78) in the vicinity of the oil discharge (66) from the shroud (59), the baffle (78) acting to deflect the oil flow from the shroud (59) away from an oil pump (53) to prevent cavitation thereof.

9. A method as set forth in claim 6, characterized in including the step of providing an oil separator (48) in the vent (47).

## Patentansprüche

1. Turbokompressor (11) des Typs, der einen Motor (12) zum Antreiben eines Flügelrades (37) über eine Welle (28) mit kleiner Geschwindigkeit hat, ein geschmiertes Getriebe (31) und eine Hochgeschwindigkeitswelle (36),
wobei das Getriebe (31) in einem Getriebegehäuse (23) angeordnet ist, das einen Ölsumpf (44), eine Entlüftungsöffnung (47), die fluidleitend mit einem Bereich von tieferem Druck verbunden ist, und eine Abgrenzeinrichtung (59) zwischen dem Getriebe (31) und dem Zwischenraum, welcher das Getriebe (14) umgibt, hat, wobei die Abgrenzeinrichtung (59) wirkt, um die Ölströmung vom Getriebe (31) in den Sumpf (44) hinein zu lenken,
dadurch gekennzeichnet, dass die Abgrenzeinrichtung aus einer Abschirmung (59) besteht, die in einer das Getriebe (31) eng umgebenden Beziehung angeordnet ist, um das Getriebe (31) davor zu bewahren, Öl radial nach aussen zu schleudern, und um dadurch zu verhindern, dass Öl innerhalb des Kühlmittels mit tiefem Druck in den Getriebezwischenraum zwischen der Abschirmung (59) und dem Getriebegehäuse (23) mitgerissen wird.

2. Turbokompressor nach Anspruch 1, dadurch gekennzeichnet, dass er weiter eine Ölpumpe (53) im Sumpf (44) und eine Ablenkplatte (78) umfasst, die zwischen der Pumpe (53) und der Abschirmung (59) angeordnet ist, um das Öl, das von der Abschirmung (59) geleitet wird, abzulenken, damit eine Hohlraumbildung bei der Ölpumpe (53) verhindert wird.

3. Turbokompressor nach Anspruch 1, dadurch gekennzeichnet, dass er weiter einen Ölabscheider (48) in der Entlüftungsöffnung (47) umfasst.

4. Turbokompressor nach Anspruch 1, dadurch gekennzeichnet, dass der Turbokompressor (11) für die Kompression eines Kühlmittels mit relativ hohem Druck und grosser Dichte konstruiert ist.

5. Turbokompressor nach Anspruch 4, dadurch gekennzeichnet, dass das Kühlmittel aus R-22 besteht.

6. Verfahren zum Reduzieren von Ölverlusten für ein Getriebegehäuse (23) eines Turbokompressors (11), der einen Ölsumpf (44) und ein geschmiertes Hochgeschwindigkeitsgetriebe (31) hat, welches dazu neigt, Öl nach aussen zu schleudern, wodurch Nebel im Getriebe (14) erzeugt wird, wobei das Verfahren die Schritte umfasst:
das Getriebe (14) zu einem Bereich von tieferem Druck zu entlüften (47),
die Ölströmung vom Getriebe (31) in den Sumpf (44) hinein zu lenken, indem eine Abgrenzung (59) zwischen dem Getriebe (31) und dem Zwischenraum, der das Getriebe (14) umgibt, bereit gestellt wird,
dadurch gekennzeichnet, dass die Abgrenzung durch eine Abschirmung (59) gebildet wird, und
dass es den Schritt umfasst, die Abschirmung (59) in einer das Getriebe (31) eng umgebenden Beziehung anzuordnen, um die radiale Strömung von Öl vom Getriebe (31) nach aussen aufzuhalten und dadurch die Erzeugung von Ölnebel im Zwischenraum, der das Getriebe (14) umgibt, wesentlich zu reduzieren.

7. Verfahren nach Anspruch 6, dadurch gekennzeichnet, dass es den Schritt umfasst, einen Austrittsabschnitt (66) auf der Abschirmung (59) bereit zu stellen, um die Ölströmung von der Abschirmung (59) zum benachbarten Ölsumpf (44) zu lenken.

8. Verfahren nach Anspruch 7, dadurch gekennzeichnet, dass es den Schritt umfasst, eine Ablenkplatte (78) in der Umgebung des Ölaustrittes (66) aus der Abschirmung (59) bereit zu stellen, wobei die Ablenkplatte (78) wirkt, um die Ölströmung aus der Abschirmung (59) von einer Ölpumpe (53) weg zu lenken, um eine Hohlraumbildung bei ihr zu verhindern.

9. Verfahren nach Anspruch 6, dadurch gekennzeichnet, dass es den Schritt umfasst, einen Ölabscheider (48) in der Entlüftungsöffnung (47) bereit zu stellen.

## Revendications

1. Un compresseur centrifuge (11) du type ayant un moteur (12) pour commander un rotor (37) par l'intermédiaire d'un arbre à faible vitesse (28), d'un engrenage lubrifié (31) et d'un arbre à vitesse élevée (36),
dans lequel l'engrenage (31) est placé dans un logement de transmission (23) comportant un réservoir d'huile (44), un évent (47) en communication de fluide avec une aire à pression plus faible, et un moyen de barrière (59) entre l'engrenage (31) et l'espace entourant la transmission (14), le moyen de barrière (59) agissant de façon à diriger l'écoulement d'huile de l'engrenage (31) jusque dans le réservoir (44),
caractérisé en ce que le moyen de barrière est une enveloppe de protection (59) disposée de façon à entourer étroitement l'engrenage (31) pour préserver l'engrenage (31) d'une projection de l'huile radialement vers l'extérieur et empêcher de ce fait l'huile d'être entraînée à l'intérieur du réfrigérant à basse pression dans l'espace de transmission entre l'enveloppe de protection (59) et le logement de transmission (23).

2. Un compresseur centrifuge tel qu'exposé à la revendication 1, caractérisé en ce qu'il comprend en outre une pompe à huile (53) dans le réservoir (44) et un déflecteur (78) disposé entre la pompe (53) et l'enveloppe de protection (59) pour dévier l'huile qui est dirigée à partir de l'enveloppe de protection (59) de façon à empêcher une cavitation au niveau de la pompe à huile (53).

3. Un compresseur centrifuge tel qu'exposé à la revendication 1, caractérisé en ce qu'il comprend un séparateur d'huile (48) dans l'évent (47).

4. Un compresseur centrifuge tel qu'exposé à la revendication 1, caractérisé en ce que le compresseur centrifuge (11) est conçu pour la compression d'un réfrigérant à densité et pression relativement élevées.

5. Un compresseur centrifuge tel qu'exposé à la revendication 4, caractérisé en ce que le réfrigérant est R-22.

6. Un procédé de réduction de la perte d'huile pour un logement de transmission (23) d'un compresseur centrifuge (11) comportant un réservoir d'huile (44) et un engrenage à vitesse élevée lubrifié (31) qui tend à projeter l'huile vers l'extérieur pour générer de la buée dans la transmission (14), le procédé comportant les étapes de:
fournir une décharge (47) de la transmission (14) jusqu'à une aire à pression plus faible,
diriger l'écoulement d'huile à partir de l'engrenage (31) jusque dans le réservoir (44) en fournissant une barrière (59) entre l'engrenage (31) et l'espace entourant la transmission (14),
caractérisé en ce que la barrière est formée par une enveloppe de protection (59), et
en ce qu'il comprend l'étape de placer l'enveloppe de protection (59) de façon à ce qu'elle entoure étroitement l'engrenage (31) pour empêcher l'écoulement radialement vers l'extérieur de l'huile à partir de l'engrenage (31) et réduire de ce fait essentiellement la création d'une buée d'huile dans l'espace entourant la transmission (14).

7. Un procédé tel qu'exposé à la revendication 6, caractérisé en ce qu'il comprend l'étape de fournir une section de décharge (66) sur l'enveloppe de prctection (59) pour diriger l'écoulement d'huile à partir de l'enveloppe de protection (59) jusqu'au réservoir d'huile adjacent (44).

8. Un procédé tel qu'exposé à la revendication 7, caractérisé en ce qu'il comprend l'étape de fournir un déflecteur (78) dans le voisinage de la décharge d'huile (66) à partir de l'enveloppe de protection (59), le déflecteur (78) agissant de façon à dévier l'écoulement d'huile à partir de l'enveloppe de protection (59) à l'écart d'une pompe à huile (53) pour empêcher une cavitation de celle-ci.

9. Un procédé tel qu'exposé à la revendication 6, caractérisé en ce qu'il comprend l'étape de fournir un séparateur d'huile (48) dans l'évent (47).
